# EUROPEAN PATENT APPLICATION

(11) **EP 3 396 361 A1**
(43) Date of publication of application: **31.10.2018**
(21) Application number: 16879281.0
(22) Date of filing: 19.12.2016
(51) Int. Cl.: G01N 21/89, G01N 21/894

(54) **PINHOLE OR HOLE DETECTION DEVICE AND METHOD**

(30) Priority: 24.12.2015 KR 20150185910
(71) Applicant: POSCO, Nam-gu Pohang-si, Gyeongsangbuk-do 37859 (KR)
(72) Inventor: BAE, Ho-Moon, Pohang-si, Gyeongsangbuk-do 37877 (KR)
(74) Representative: Potter Clarkson LLP
(86) International application number: PCT/KR2016/014901
(87) International publication number: WO 2017/111414

(57) **Abstract**

According to one embodiment of the present invention, a detection device and a detection method for detecting a hole or a pinhole present in a material are provided. The detection device according to one embodiment of the present invention comprises: an illumination unit for emitting light at one side of the material; a light receiving unit for acquiring an image of the material at another side of the material so as to output a detection signal; a detection unit for determining whether a hole or a pinhole is present in the material by using the detection signal; and an illumination control unit for dividing the illumination unit into a plurality of regions, and controlling the illumination unit such that light having different intensities of illumination for each region is emitted.

## Description

### [Technical Field]

The present disclosure relates to a detection device and a detection method for detecting a pinhole or a hole present in various kinds of steel sheets.

### [Background Art]

A hole or a pinhole is generally generated due to a dropout of an inclusion included in a tissue or other process problems when a material is rolled in a factory (for example, a cold rolling factory, an electrical steel sheet factory, or a stainless steel factory) performing cold rolling in a steel process. When a product for pressure or a product containing contents is manufactured using a steel sheet having such a hole or pinhole, the pressure may be leaked or the contents may be leaked due to the hole or pinhole. Therefore, it is necessary to thoroughly inspect whether or not a hole or the pinhole is present before delivering the steel sheet, or the like, to a customer.

### [Disclosure]

### [Technical Problem]

An aspect of the present disclosure is to provide a detection device capable of accurately detecting a hole and/or a pinhole present in a steel material such as a steel sheet or a non-steel material.

Another aspect of the present disclosure is to provide a detection method capable of accurately detecting a hole and/or a pinhole present in a steel material such as a steel sheet or a non-steel material.

### [Technical Solution]

According to an aspect of the present disclosure, a detection device for detecting a hole or a pinhole present in a material includes: an illumination unit irradiating light to one side of the material; a light receiving unit acquiring an image of the material on the other side of the material to output a detection signal; a detection unit determining whether or not the hole or the pinhole is present in the material using the detection signal; and an illumination control unit dividing the illumination unit into a plurality of regions and controlling the illumination unit to irradiate light having different intensities of illumination for each of the plurality of regions.

The illumination unit may include a plurality of light emitting diodes (LEDs).

The light receiving unit may include a plurality of cameras.

The detection device may further include a condensing lens disposed between the illumination unit and the material.

The illumination control unit may set an adjusting region of the illumination unit on the basis of a position of a camera of the light receiving unit and a position of an edge of the material.

The illumination control unit may set a region that is not included in the adjusting region in the illumination unit as a central region, set a region corresponding to an outer portion of an edge of the material in the adjusting region as an outer region, and set a region between the outer region and the central region as an edge region.

The illumination control unit may control the illumination unit so that the central region of the illumination unit irradiates light having a first illumination intensity, the outer region of the illumination unit irradiates light having a second illumination intensity lower than the first illumination intensity, and the edge region of the illumination unit irradiates light having an illumination intensity between the first illumination intensity and the second illumination intensity. The first illumination intensity may be an illumination intensity capable of detecting the hole or the pinhole present in the material, and the second illumination intensity may be an illumination intensity allowing a reference amount of light to be incident to a camera of the light receiving unit. The reference amount of light may be a minimum amount of light for the camera included in the light receiving unit to output a maximum brightness value . The edge region may irradiate light having an illumination intensity linearly increased from the second illumination intensity to the first illumination intensity from an outer portion toward a center.

The illumination control unit may set the regions of the illumination unit when a welded portion at which a preceding material and a following material are welded to each other in the material passes through the detection device or may set the regions of the illumination unit when the material meanders.

According to another aspect of the present disclosure, a detection method for detecting a hole or a pinhole present in a material using an illumination unit disposed below the material and a light receiving unit disposed above the material includes: dividing the illumination unit into a plurality of regions; and controlling the illumination unit to irradiate light having different intensities of illumination for each of the plurality of regions.

The dividing may include: setting an adjusting region on the basis of a position of a camera included in the light receiving unit and a position of an edge of the material; and setting a region that is not included in the adjusting region as a central region, setting a region corresponding to an outer portion of the edge of the material in the adjusting region as an outer region, and setting a region between the outer region and the central region as an edge region.

In the controlling of the illumination unit, the illumination unit may be controlled so that the central region of the illumination unit irradiates light having a first illumination intensity, the outer region of the illumination unit irradiates light having a second illumination intensity lower than the first illumination intensity, and the edge region of the illumination unit irradiates light having an illumination intensity between the first illumination intensity and the second illumination intensity.

The dividing may be performed when a welded portion at which a preceding material and a following material are welded to each other in the material passes through the illumination unit and the light receiving unit or may be performed when the material meanders.

### [Advantageous Effects]

As set forth above, according to an exemplary embodiment in the present disclosure, a hole and/or a pinhole present in a steel material such as a steel sheet or a non-steel material may be accurately detected. Particularly, the detection device and the detection method according to the exemplary embodiment in the present disclosure may also accurately detect the hole and/or the pinhole present in a portion close to the edge of the material.

### [Description of Drawings]

FIG. 1 is a schematic view illustrating a detection device according to an exemplary embodiment in the present disclosure.
FIG. 2 is a view illustrating a method for setting edge portions of an illumination unit in a detection device and a detection method according to the exemplary embodiment in the present disclosure.
FIG. 3 is a view illustrating a method for setting brightness of the illumination unit in the detection device and the detection method according to the exemplary embodiment in the present disclosure.
FIG. 4 is a schematic view illustrating an example of a method for controlling the illumination unit in the detection device and the detection method according to the exemplary embodiment in the present disclosure.
FIG. 5 is a schematic view illustrating an example of a method for controlling the illumination unit in the detection device and the detection method according to the exemplary embodiment in the present disclosure.
FIG. 6 is a view illustrating a point in time in which regions of the illumination unit are set in the detection device and the detection method according to the exemplary embodiment in the present disclosure.
FIG. 7 is views illustrating examples of images of steel sheets acquired by a light receiving unit of the detection device according to the exemplary embodiment in the present disclosure.
FIG. 8 is a flow chart for describing the detection method according to the exemplary embodiment in the present disclosure.

### [Best Mode for Invention]

Hereinafter, a detection device and a detection method according to an exemplary embodiment in the present disclosure will be described with reference to the drawings.

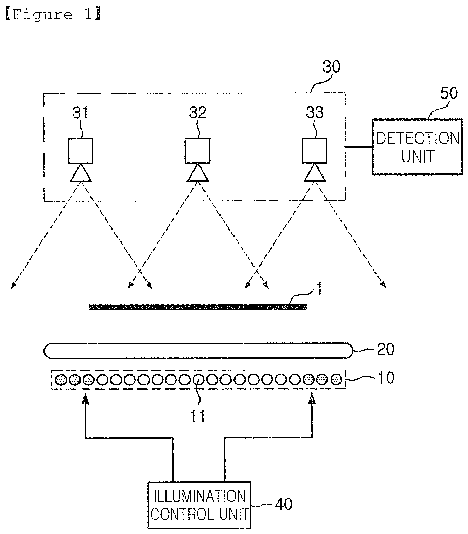

FIG. 1 is a schematic view illustrating a detection device according to an exemplary embodiment in the present disclosure. The detection device according to the exemplary embodiment in the present disclosure includes an illumination unit 10, a light receiving unit 30, an illumination control unit 40, and a detection unit 50. The detection device according to the exemplary embodiment in the present disclosure may further include a lens 20. The illumination unit 10 may include a plurality of light emitting diodes (LEDs) 11. The light receiving unit 30 may include one or more cameras 31, 32, and 33.

The illumination unit 10 may be disposed below a material 1 and irradiate light. The illumination unit 10 may irradiate light having different intensities of illumination for each region depending on a control of the illumination control unit 40. For example, a central region of the illumination unit 10, which is a position corresponding to a central portion of the material 1, may irradiate light having a first illumination intensity, outer regions of the illumination unit 10, which are positions corresponding to outer portions of the material 1, may irradiate light having a second illumination intensity lower than the first illumination intensity, and edge regions of the illumination unit 10 between the central region and the outer regions may irradiate light having an illumination intensity between the first illumination intensity and the second illumination intensity.

The first illumination intensity, which is an illumination intensity capable of detecting a hole and/or a pinhole present in the material 1, may be a sufficiently high illumination intensity, and the second illumination intensity may be an illumination intensity allowing a reference amount of light to be incident to a camera 31 or 33 of the light receiving unit 30.

The reference amount of light may be an amount of light allowing a brightness value of an image acquired by the camera 31 or 33 to be maximum. For example, when the camera 31 or 33 outputs a brightness value of each pixel in 8 bits, the reference amount of light may be a minimum amount of light allowing the camera 31 or 33 to output 255 as a brightness value. The reference amount of light may be determined by self-characteristics of an image sensor, an aperture value, and the like, of the camera 31 or 33. When an amount of light more than the reference amount of light is incident to the camera 31 or 33, the image sensor may be deteriorated. Therefore, in the detection device and the detection method according to the exemplary embodiment in the present disclosure, an illumination intensity of the light irradiated from the outer regions of the illumination unit 10 may be adjusted to the second illumination intensity to prevent the deterioration of the image sensor of the camera.

The edge regions of the illumination unit 10 may irradiate light having an illumination intensity linearly increased from the second illumination intensity to the first illumination intensity from the outside toward the inside.

The light receiving unit 30 may be disposed above the material 1. Light passing through the material 1 may be incident to the light receiving unit 30, and the light receiving unit 30 may output a detection signal depending on an amount of light incident thereto. As described above, the light receiving unit 30 may include one or more cameras 31, 32, and 33. In this case, an image signal output by each of the cameras 31, 32, and 33 may be the detection signal. The number of cameras may be determined depending on a size of a hole and/or a pinhole to be detected, a size of the material, and the like.

The illumination control unit 40 may set regions of the illumination unit 10 depending on a width of the material 1, and may control the illumination unit 10 to irradiate light having an appropriate illumination intensity for each region.

The detection unit 50 may determine whether or not the hole and/or the pinhole is present in the material 1 on the basis of the detection signal received from the light receiving unit 30. The detection unit 50 may detect a position of the hole and/or the pinhole when the hole and/or the pinhole is present in the material.

The detection unit 50 may also detect positions of edges of the material 1 on the basis of the detection signal. In this case, the detection unit 50 may provide the positions of the edges of the material 1 to the illumination control unit 40, and the illumination control unit 40 may set the regions of the illumination unit 10 using the positions of the edges of the material 1.

The detection device according to the exemplary embodiment in the present disclosure may further include a condensing lens disposed between the material 1 and the illumination unit 10. The condensing lens 20 may be used to improve use efficiency of the light.

Although not illustrated, the illumination control unit 40 and/or the detection unit 50 may include at least one processing unit and a memory. Here, the processing unit may include, for example, a central processing unit (CPU), a graphics processing unit (GPU), a microprocessor, an application specific integrated circuit (ASIC), a field programmable gate array (FPGA), or the like, and may have a plurality of cores. The memory may be a volatile memory (such as a random access memory (RAM), or the like), a non-volatile memory (such as a read only memory (ROM), a flash memory, or the like), or a combination thereof. A program for performing the detection method according to the exemplary embodiment in the present disclosure may be loaded in the memory.

In addition, the illumination control unit 40 and/or the detection unit 50 may include an additional storage. The storage may include a magnetic storage, an optical storage, or the like, but is not limited thereto. A computer-readable command for implementing the detection method according to the exemplary embodiment in the present disclosure may be stored in the storage, and other computer-readable commands for implementing an operating system, an application program, and the like, may also be stored in the storage. The computer-readable command stored in the storage may be loaded into the memory in order to be executed by the processing unit.

In addition, the illumination control unit 40 and the detection unit 50 may also be implemented by one processing unit and one memory.

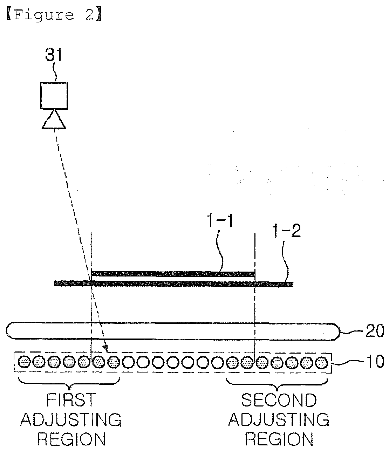

FIG. 2 is a view illustrating a method for setting brightness adjusting regions, that is, outer regions and edge regions, of an illumination unit in a detection device and a detection method according to the exemplary embodiment in the present disclosure. In FIG. 2, reference numeral 1-1 refers to a material having a minimum width, and reference numeral 1-2 refers to a material having a maximum width.

In FIG. 2, a first adjusting region and a second adjusting region refer to regions in which brightness is adjusted in the illumination unit 10, and may be regions up to about several tens of millimeters inwardly of a material as compared to a minimum width of the material. The first adjusting region and the second adjusting region may be determined by a distance between the material and an illumination source, a distance between a camera and the material, and the like.

A method for setting the first adjusting region, which is a brightness adjusting region of a left portion of the illumination unit 10, when intending to detect a hole and/or a pinhole with respect to the material 1-1 having the minimum width is described below with reference to FIG. 2.

As illustrated in FIG. 2, the first adjusting region refers to a region from an LED positioned slightly inside an illumination of a position viewed when an oblique line is drawn from the leftmost camera 31 to pass through an end portion of the material 1-1 having the minimum width to the leftmost LED. That is, since the illumination unit 10 is very bright in a position corresponding to a central portion of the material, when this light enters the camera, white noise is generally generated in the camera to cause a problem in acquiring an image. Therefore, in order to stably secure the image, the first adjusting region is set by the method as described above.

The second adjusting region may also be set by the same method as the method for setting the first adjusting region.

In addition, in a case of intending to detect a hole and/or a pinhole with respect to the material 1-2 having the maximum width, the first adjusting region and the second adjusting region may be set by the same method as the method described above.

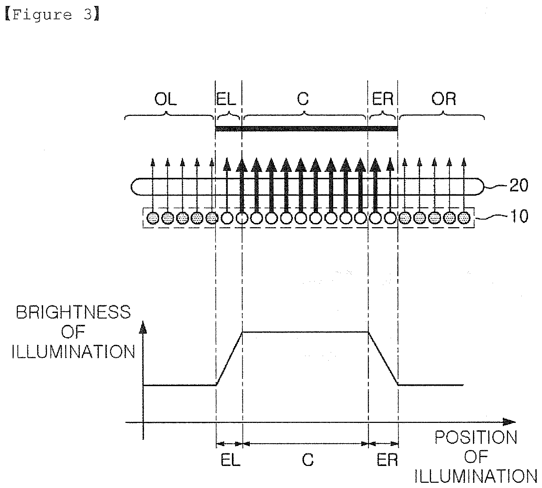

FIG. 3 is a view illustrating a method for setting brightness of the illumination unit in the detection device and the detection method according to the exemplary embodiment in the present disclosure.

As illustrated in FIG. 3, the illumination unit 10 includes a central region C corresponding to a central portion of a material, outer regions OL and OR corresponding to outer portions of the material, and edge regions EL and ER, which are regions between the central region C and the outer regions OL and OR.

A first outer region OL and a first edge region EL of the regions described above correspond to the first adjusting region of FIG. 2, and a second outer region OR and a second edge region ER of the regions described above correspond to the second adjusting region of FIG. 2.

As described above, the illumination control unit 40 (see FIG. 1) may set the regions of the illumination unit 10. In detail, the illumination control unit 40 sets the first adjusting region and the second adjusting region by the method described in FIG. 2. To this end, the illumination control unit 40 (see FIG. 1) may use a position of the camera 31 or 33 and information on the edges of the material provided from the detection unit 50 (see FIG. 1) . Then, the illumination control unit 40 may set a portion that is not the first adjusting region and the second adjusting region as the central region C, set regions corresponding to the outer portions of the material in each of the first adjusting region and the second adjusting region as the outer regions OL and OR, and set regions that are not to the outer regions OL and OR in the regions corresponding to the outer portions of the material in each of the first adjusting region and the second adjusting region as the edge regions EL and ER.

The illumination control unit 40 (see FIG. 1) may control the illumination unit 10 to irradiate light having different intensities of illumination for each region. That is, as illustrated in FIG. 3, the central region C of the illumination unit 10 may irradiate the light having the first illumination intensity, which is a sufficiently high illumination intensity capable of detecting the hole and/or the pinhole present in the material 1, the outer regions OL and OR of the illumination unit 10 may irradiate the light having the second illumination intensity allowing the reference amount of light to be incident to the camera 31 or 33 of the light receiving unit 30, and the edge regions EL and ER of the illumination unit 10 may irradiate the light having the illumination intensity linearly increased from the second illumination intensity to the first illumination intensity from the outside toward the inside.

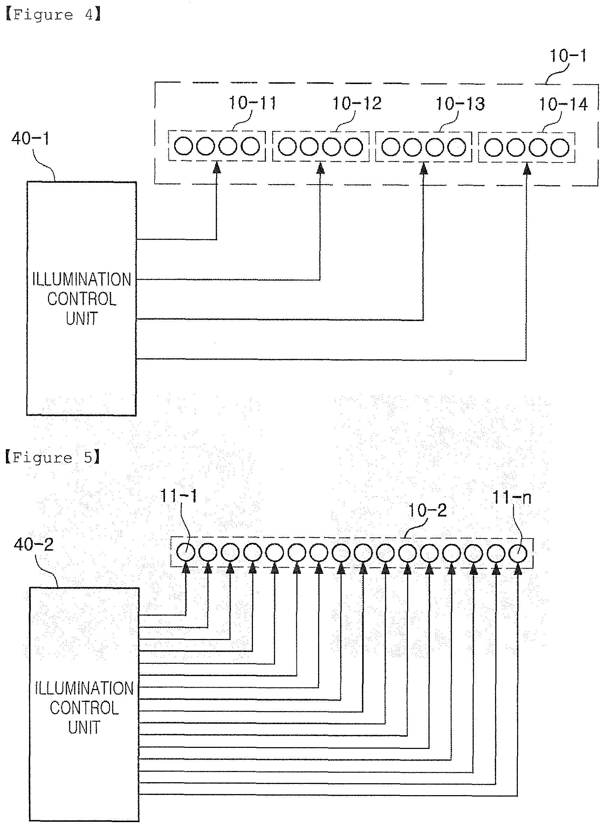

FIG. 4 is a schematic view illustrating an example of a method for controlling the illumination unit in the detection device and the detection method according to the exemplary embodiment in the present disclosure.

As illustrated in FIG. 4, an illumination control unit 40-1 may control an illumination unit 10-1 to irradiate light in the same pattern as the pattern illustrated in FIG. 3, and the illumination unit 10-1 may be controlled for each of a plurality of modules 10-11 to 10-14.

Each of the modules 10-11 to 10-14 may include a plurality of LEDs. Each of the plurality of modules 10-11 to 10-14 may have a length of 10 to 20mm. When the illumination unit 10-1 is controlled for each of the plurality of modules 10-11 to 10-14, all of the LEDs of one module may have the same brightness of light.

FIG. 5 is a schematic view illustrating an example of a method for controlling the illumination unit in the detection device and the detection method according to the exemplary embodiment in the present disclosure.

As illustrated in FIG. 5, an illumination control unit 40-2 may individually control the respective LEDs 11-1 to 11-n constituting an illumination unit 10-2.

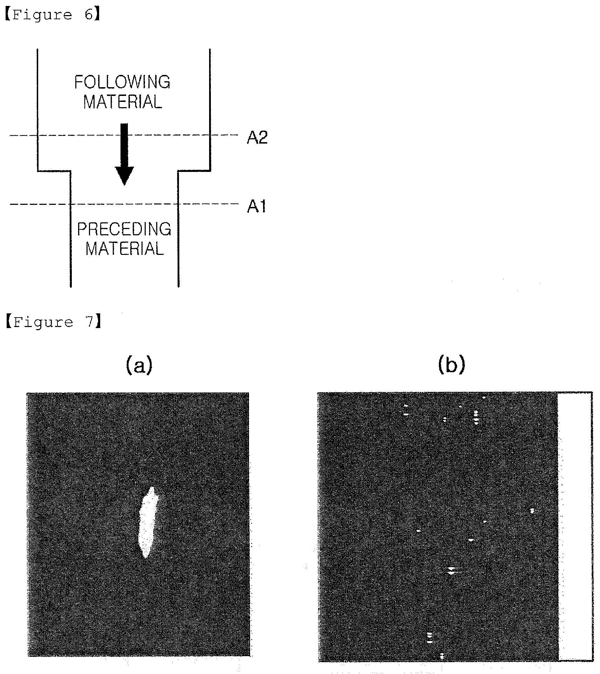

FIG. 6 is a view illustrating a point in time in which regions of the illumination unit are set in the detection device and the detection method according to the exemplary embodiment in the present disclosure.

As described above, the illumination control unit 40 (see FIG. 1) sets the regions of the illumination unit 10 (see FIG. 1) . When a width of the preceding material and a width of the following material are different from each other as illustrated in FIG. 6, the illumination control unit may set the regions of the illumination unit at a point in time in which a welded portion at which the preceding material and the following material are welded to each other passes through the detection device.

In detail, the illumination control unit receives information on the width of each of the preceding material and the following material, a position of the welded portion, and the like, from an external device (for example, a processor controlling all the processes), and starts an operation for setting the regions several meters before the welded portion arrives at the detection device, that is, at a point in time in which a point of A1 of FIG. 6 arrives at the detection device. For example, when A1 of FIG. 6 arrives at the detection device, the illumination control unit controls the illumination unit so that the entire illumination unit irradiates light having an illumination intensity for detecting edges of the material (particularly, the following material). Then, the detection unit detects the positions of the edges of the material, and the illumination control unit sets the regions of the illumination unit, that is, the central region, the outer regions, and the edge regions using the positions of the edge of the material. A method for setting the regions may be easily understood with reference to the description of FIGS. 2 and 3. A process of setting the regions may be performed several meters after the welded portion passes through the detection device, that is, until a point of A2 of FIG. 6 passes through the detection device. Then, the illumination control unit adjusts strength of the light irradiated from the illumination unit for each of the set regions.

A case of resetting the regions when the welded portion passes through the detection device is illustrated in FIG. 6, but a process of resetting the regions may be performed whenever necessary or may be periodically performed. For example, when meandering of the material is generated, the process of resetting the regions may be performed. The detection unit may determine whether or not the meandering of the material is generated on the basis of the detection signal received from the light receiving unit.

FIG. 7 is views illustrating examples of images of steel sheets acquired by a light receiving unit of the detection device according to the exemplary embodiment in the present disclosure. As illustrated in (a) and (b) of FIG. 7, it may be seen that pinholes present in edge portions and edges are very clearly acquired.

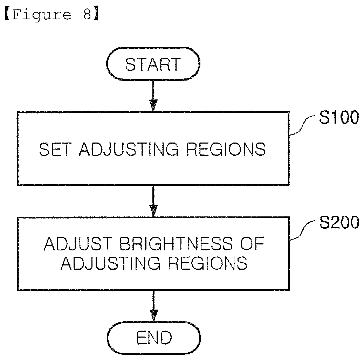

FIG. 8 is a flow chart for describing the detection method according to the exemplary embodiment in the present disclosure.

First, the illumination unit sets adjusting regions (S100). Then, the regions of the illumination unit may be subdivided into the central region, the outer regions, and the edge regions. A detailed operation for this may be easily understood with reference to the description of FIGS. 2 and 3.

Then, brightness of the adjusting regions is adjusted (S200) . A detailed operation for this may be easily understood with reference to the description of FIG. 3.

In order to detect the hole or the pinhole present in the edge portion of the material, there is an example of using an edge mask or an edge filter in the conventional case, but in this case, a motor for driving the edge mask or the edge filter, or the like, may be required, and a region in which detection is impossible may be present or an error may occur in a result, depending on a change in strength of light. However, in the pinhole detection device according to the exemplary embodiment in the present disclosure, the edge mask or the edge filter is not used. Therefore, the problems described above do not occur. Furthermore, a distance between the material and the illumination may be shortened to secure efficient detection performance.

While exemplary embodiments have been shown and described above, it will be apparent to those skilled in the art that modifications and variations could be made without departing from the scope of the present invention as defined by the appended claims.

## Claims

1. A detection device for detecting a hole or a pinhole present in a material, comprising:
an illumination unit irradiating light to one side of the material;
a light receiving unit acquiring an image of the material on the other side of the material to output a detection signal;
a detection unit determining whether or not the hole or the pinhole is present in the material using the detection signal; and
an illumination control unit dividing the illumination unit into a plurality of regions and controlling the illumination unit to irradiate light having different intensities of illumination for each of the plurality of regions.

2. The detection device of claim 1, wherein the illumination unit includes a plurality of light emitting diodes (LEDs).

3. The detection device of claim 1, wherein the light receiving unit includes a plurality of cameras.

4. The detection device of claim 1, further comprising a condensing lens disposed between the illumination unit and the material.

5. The detection device of claim 1, wherein the illumination control unit sets an adjusting region of the illumination unit on the basis of a position of a camera of the light receiving unit and a position of an edge of the material.

6. The detection device of claim 5, wherein the illumination control unit sets a region that is not included in the adjusting region in the illumination unit as a central region, sets a region corresponding to an outer portion of an edge of the material in the adjusting region as an outer region, and sets a region between the outer region and the central region as an edge region.

7. The detection device of claim 6, wherein the illumination control unit controls the illumination unit so that the central region of the illumination unit irradiates light having a first illumination intensity, the outer region of the illumination unit irradiates light having a second illumination intensity lower than the first illumination intensity, and the edge region of the illumination unit irradiates light having an illumination intensity between the first illumination intensity and the second illumination intensity.

8. The detection device of claim 7, wherein the first illumination intensity is an illumination intensity capable of detecting the hole or the pinhole present in the material, and the second illumination intensity is an illumination intensity allowing a reference amount of light to be incident to a camera of the light receiving unit.

9. The detection device of claim 8, wherein the reference amount of light is a minimum amount of light for the camera included in the light receiving unit to output a maximum brightness value.

10. The detection device of claim 7, wherein the edge region irradiates light having an illumination intensity linearly increased from the second illumination intensity to the first illumination intensity from an outer portion toward a center.

11. The detection device of claim 1, wherein the illumination control unit sets the regions of the illumination unit when a welded portion at which a preceding material and a following material are welded to each other in the material passes through the detection device.

12. The detection device of claim 1, wherein the illumination control unit sets the regions of the illumination unit when the material meanders.

13. A detection method for detecting a hole or a pinhole present in a material using an illumination unit disposed below the material and a light receiving unit disposed above the material, comprising:
dividing the illumination unit into a plurality of regions; and
controlling the illumination unit to irradiate light having different intensities of illumination for each of the plurality of regions.

14. The detection method of claim 13, wherein the dividing includes:
setting an adjusting region on the basis of a position of a camera included in the light receiving unit and a position of an edge of the material; and
setting a region that is not included in the adjusting region as a central region, setting a region corresponding to an outer portion of the edge of the material in the adjusting region as an outer region, and setting a region between the outer region and the central region as an edge region.

15. The detection method of claim 14, wherein in the controlling of the illumination unit, the illumination unit is controlled so that the central region of the illumination unit irradiates light having a first illumination intensity, the outer region of the illumination unit irradiates light having a second illumination intensity lower than the first illumination intensity, and the edge region of the illumination unit irradiates light having an illumination intensity between the first illumination intensity and the second illumination intensity.

16. The detection method of claim 15, wherein the first illumination intensity is an illumination intensity capable of detecting the hole or the pinhole present in the material, and the second illumination intensity is an illumination intensity allowing a reference amount of light to be incident to the camera of the light receiving unit.

17. The detection method of claim 16, wherein the reference amount of light is a minimum amount of light for the camera included in the light receiving unit to output a maximum brightness value.

18. The detection method of claim 15, wherein in the controlling of the illumination unit, the illumination unit is controlled so that the edge region irradiates light having an illumination intensity linearly increased from the second illumination intensity to the first illumination intensity from an outer portion toward a center.

19. The detection method of claim 13, wherein the dividing is performed when a welded portion at which a preceding material and a following material are welded to each other in the material passes through the illumination unit and the light receiving unit.

20. The detection method of claim 13, wherein the dividing is performed when the material meanders.
